(19) Europäisches Patentamt
European Patent Office
Office européen des brevets

(11) EP 1 328 249 B1

(12) **FASCICULE DE BREVET EUROPEEN**

(45) Date de publication et mention de la délivrance du brevet:
**13.12.2006 Bulletin 2006/50**

(21) Numéro de dépôt: **01978563.3**

(22) Date de dépôt: **18.10.2001**

(51) Int Cl.:
***C08L 51/00*** *(2006.01)* ***C08G 81/02*** *(2006.01)*
***C08L 53/02*** *(2006.01)* ***C08F 8/14*** *(2006.01)*
***C08F 287/00*** *(2006.01)*

(86) Numéro de dépôt international:
**PCT/FR2001/003226**

(87) Numéro de publication internationale:
**WO 2002/032391 (25.04.2002 Gazette 2002/17)**

(54) **COPOLYMERES AMPHIPHILES UTILISABLES NOTAMMENT COMME AGENT EMULSIONNANT**
AMPHIPHILE COPOLYMERE EINSETZBAR ALS EMULSIONSMITTEL
AMPHIPHILIC COPOLYMERS FOR USE IN PARTICULAR AS EMULSIFYING AGENT

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **20.10.2000 FR 0013447**

(43) Date de publication de la demande:
**23.07.2003 Bulletin 2003/30**

(73) Titulaire: **LABORATOIRES URGO**
**21300 Chenove (FR)**

(72) Inventeurs:
- **CAMUS, Elise**
  **F-26800 Etoile Sur Rhone (FR)**
- **BRACHAIS, Claire**
  **F-21000 Chenove (FR)**
- **AUGUSTE, Stéphane**
  **F-21490 Varois et Chaignot (FR)**

(74) Mandataire: **Hubert, Philippe et al**
**Cabinet Beau de Loménie**
**158, rue de l'Université**
**75340 Paris Cédex 07 (FR)**

(56) Documents cités:
**US-H- H1 022**

- **LIU R ET AL: "Preparation and Spectroscopic Properties of Phenanthrene-Labeld SEBS Triblock Copolymers" MACROMOLECULES, vol. 32, no. 12, 27 avril 1999 (1999-04-27), pages 3957-3963, XP002163235**
- **AL-SABAGH A M ET AL: "Water-based non-ionic polymeric surfactants as oil spill dispersants" JOURNAL OF CHEMICAL TECHNOLOGY AND BIOTECHNOLOGY, vol. 74, 22 mai 1999 (1999-05-22), pages 1075-1081, XP002163236**
- **QUINTANA J R ET AL: "Crystallization and Thermal Behavior of Poly(vinylidene Fluoride)/ Poly[styrene-b-(Ethylene-co-butylene)-b-Styrene] Blends Functionalized with Succinic Groups" JOURNAL OF POLYMER SCIENCE: PART B: POLYMER PHYSICS, vol. 32, 11 mars 1993 (1993-03-11), pages 201-204, XP002163237**
- **JIANG-JEN LIN ET AL: "Synthesis, Characterization, and Interfacial Behaviors of Poly(oxyethylene)-Grafted SEBS Copolymers" INDUSTRIAL & ENGINEERING CHEMISTRY RESEARCH, vol. 39, no. 1, 30 novembre 1999 (1999-11-30), pages 65-71, XP002163238**
- **DATABASE WPI Section Ch, Week 199347 Derwent Publications Ltd., London, GB; Class A18, AN 1993-374751 XP002163239 & JP 05 279623 A (NIPPON STEEL CHEM CO), 26 octobre 1993 (1993-10-26)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 328 249 B1

Printed by Jouve, 75001 PARIS (FR)

## Description

La présente invention concerne de nouveaux copolymères à blocs du type poly(styrène)-poly(éthylène-butylène)-poly(styrène) dans lesquels la séquence centrale poly(éthylène-butylène) a été modifiée par greffage chimique de groupes hydrophiles afin de les rendre amphiphiles.

L'invention concerne également un procédé de préparation de ces nouveaux copolymères amphiphiles et leur utilisation notamment comme agent émulsionnant ou absorbant.

On connaît depuis longtemps des copolymères à blocs du type ABA composés d'un bloc central élastomérique B poly(éthylène-butylène) et de deux blocs terminaux thermoplastiques A poly(styrène) appelés en abrégé SEBS.

De tels produits sont par exemple commercialisés par la société SHELL sous le nom commercial KRATON®.

Ces polymères sont largement utilisés dans de nombreuses applications comme pour la réalisation d'objets moulés, par exemple de semelles de chaussures, de revêtements, ou encore comme liant ou plastifiant dans divers produits et formulations et enfin comme adhésifs. Etant donné leur nature hydrocarbonée, ces copolymères SEBS sont très hydrophobes et par conséquent déficients dans de nombreuses applications comme par exemple celle dans laquelle l'adhérence à une surface polaire est requise.

Il existe donc aussi un SEBS modifié dont la séquence centrale élastomérique comporte un groupe fonctionnel, choisi pour permettre la création d'interactions avec les surfaces polaires.

Ce produit est un SEBS maléisé commercialisé par la société SHELL sous la dénomination KRATON G 1901® qui possède environ 2% en masse de fonctions anhydrides succiniques fixées sur la chaîne centrale poly(éthylène-butylène).

La présence des fonctions anhydrides succiniques réparties le long de la chaîne centrale permet d'obtenir ainsi une meilleure adhésion sur le verre, les textiles et les métaux.

Toutefois, s'ils présentent des propriétés mécaniques excellentes et une bonne solubilité dans les solvants organiques, tous ces SEBS modifiés ou non de par leur nature hydrophobe sont incompatibles avec des produits hydrophiles dont l'incorporation dans des formulations ou produits à base de SEBS est par conséquent très difficile voire impossible.

Si cette incompatibilité n'est sans doute pas gênante dans des applications comme la réalisation d'objets moulés ou de revêtements, en revanche elle pose beaucoup plus de problèmes en particulier dès que l'on utilise ces SEBS comme adhésifs, en particulier en contact avec la peau ou les muqueuses. Dans ce cas, ils sont un élément de base de formulations ou de produits dans lesquels il est souvent souhaitable d'incorporer des composés hydrophiles comme par exemple pour la réalisation de patchs en pharmacie ou cosmétologie, pour la réalisation de pansements pour le traitement de l'ampoule, des cors ou en dermatologie.

Ainsi, dans ce cas, l'incorporation de composés hydrophiles comme simplement de l'eau ou d'un antiseptique comme par exemple le digluconate de chlorhexidine peut être très utile voire indispensable. Or la nature hydrophobe des SEBS existants rend cette dernière très complexe voire, suivant la nature ou les quantités de composés hydrophiles à introduire, impossible.

Les produits obtenus n'étant pas stables, il est nécessaire d'y incorporer des additifs qui compliquent leurs réalisations, augmentent le coût, peuvent introduire des problèmes d'irritation etc.

De même, la capacité d'absorption d'eau ou de liquides hydrophiles des SEBS est quasi-nulle. Ainsi lors de leur utilisation dans le traitement des plaies on les mélange régulièrement avec d'autres matériaux absorbants tels les dérivés de cellulose, alginates ou autres pour obtenir un produit final qui absorbe. Le problème est que ce mélange physique complique comme précédemment la réalisation des formulations (problèmes de compatibilité, viscosité, granulométrie...), augmente les risques de perte de cohésion du produit à cause de l'absorption etc.

Il serait donc utile de posséder des copolymères SEBS , en particulier pour la réalisation de formulations adhésives ou non sur la peau, les plaies ou les muqueuses, qui présentent une meilleure affinité vis à vis des composés et liquides hydrophiles ce qui permettrait de résoudre les problèmes de formulation et d'absorption exposés précédemment. Cela permettrait aussi d'étendre l'intervalle et les domaines d'applicabilité de ces polymères.

La présente invention a pour objet de nouveaux copolymères SEBS amphiphiles répondant à ces objectifs et permettant de résoudre ces problèmes de compatibilité entre les SEBS et les composés hydrophiles et d'affinité des SEBS pour les liquides hydrophiles.
Ainsi, selon un premier aspect, la présente demande vise à couvrir des copolymères amphiphiles à blocs du type ABA comportant deux blocs terminaux thermoplastiques A poly(styrène) et un bloc central élastomère B caractérisés en ce que ce bloc central B est une séquence poly(éthylène-butylène) comportant des groupes hydrophiles greffés, ledit copolymère amphiphile ABA pouvant être représenté schématiquement par la structure suivante :

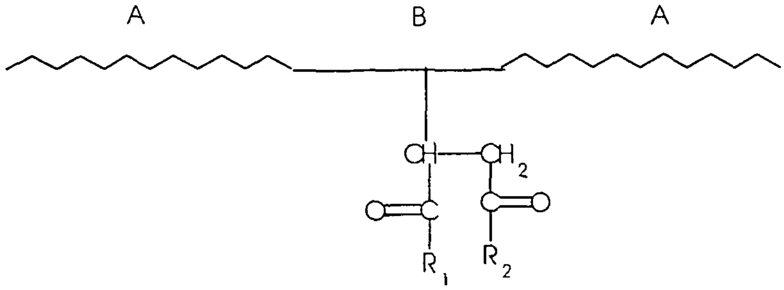

dans laquelle $R_1$ et $R_2$ identiques ou différents représentent un groupement hydrophile de masse molaire moyenne inférieure à 10 000, choisi parmi les groupes suivants :

$CH_3-O-(CH_2-CH_2-O)_n$ ;

$HO-(CH_2-CH_2-O)_n$ ;

$$HO-(CH_2-CH_2-O)_a-(\underset{\underset{CH_3}{|}}{CH}-CH_2-O)_b-(CH_2-CH_2-O-)_a\ ;$$

dans lesquels n, a et b représentent un nombre entier.

Avantageusement, dans le cadre de la présente invention, on préférera les copolymères amphiphiles dans lesquels $R_1$ et $R_2$ sont identiques.

Parmi ceux-ci on utilisera de préférence les copolymères amphiphiles dans lesquels $R_1$ et $R_2$ représentent un groupe $CH_3-O-(CH_2-CH_2-O)_n$ et en particulier ceux pour lesquels la masse molaire moyenne du groupe $CH_3-O-(CH_2-CH_2-O)_n$ varie entre 1000 et 8000 et tout particulièrement celui qui possède une masse molaire moyenne de 2000 soit n=45.

**Description de l'invention**

Les copolymères amphiphiles selon l'invention sont obtenus par greffage de composés hydrophiles sur un copolymère SEBS particulier.

Ce copolymère particulier comporte des fonctions anhydrides succiniques réparties le long de la chaîne élastomérique poly(éthylène-butylène), obtenues par réaction de l'anhydride maléique sur la séquence poly(éthylène-butylène) et on l'appellera par la suite SEBS maléisé.

Ce copolymère SEBS maléisé, qui sert de base à la réalisation des copolymères amphiphiles selon l'invention, peut être représenté schématiquement par la formule suivante :

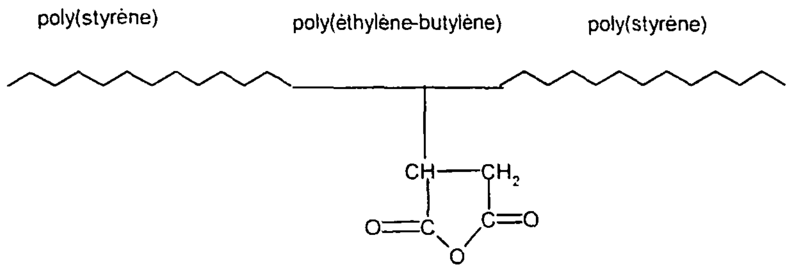

Dans cette formule, on n'a représenté, pour des raisons de simplicité, qu'un seul groupe anhydride succinique sur la séquence poly(éthylène-butylène). Il est bien évident que cette séquence comporte en réalité plusieurs groupes anhydriques succiniques. Cette simplification a également été utilisée pour représenter schématiquement les copolymères selon l'invention.

Dans le cadre de la présente invention on préférera un SEBS maléisé commercialisé par la société SHELL sous la dénomination Kraton G 1901® qui contient 2 % en poids de fonctions anhydrides succiniques fixées sur la chaîne élastomérique et 28 % en poids de polystyrène.

Ce sont ces fonctions anhydrides qui vont servir à greffer les composés hydrophiles par réaction chimique entre le composé hydrophile et l'anhydride ou sa forme acide.

En effet, selon les conditions de stockage et en particulier suivant le degré de séchage de ce SEBS maléisé une partie de ces fonctions anhydrides succiniques peuvent se présenter sous leurs formes acide après ouverture de l'anhydride en présence d'eau. La réaction s'effectue alors aussi entre les fonctions acides et le composé hydrophile.

Dans le cadre de la présente invention les composés hydrophiles qui sont greffés sur le SEBS maléisé sont de 3 types :

**A/ Les polyéthylèneglycols appelés ci-après en abrégé PEG**

Ce sont des polymères hydrophiles, hygroscopiques et stables thermiquement. Ils sont utilisés dans de très nombreux domaines industriels. Ils sont bien connus de l'homme de l'art. Ce sont des polymères de courtes chaînes possédant des fonctions hydroxyles aux extrémités. Leur masse molaire moyenne varie de 200 à 20 000.

Leur composition correspond à la structure suivante :

$HO\text{-}(CH_2\text{-}CH_2\text{-}O)_n\text{-}H$, dans laquelle n représente un nombre entier.

De tels produits sont par exemple commercialisés par la société Aldrich sous la dénomination poly(éthylèneglycol) suivie de la masse molaire moyenne du PEG considéré, par exemple poly(éthylèneglycol) 2000.

Dans le cadre de la présente invention seuls les PEG de masse molaire moyenne inférieure ou égale à environ 10 000 (n ayant donc au maximum une valeur de 230) sont utilisés. En effet, au-delà la réaction de greffage devient difficile voire impossible.

Avantageusement, on utilisera les PEG qui ont une masse molaire moyenne comprise entre 1 000 et 8 000 et en particulier le PEG qui a une masse molaire moyenne de 2 000 (n = 45).

**B/ Les polyéthylèneglycols mono méthyl éther appelés ci-après en abrégé** PEGME

Ce sont aussi des polymères de courtes chaînes utilisés comme les PEG dans de très nombreux domaines et bien connus de l'homme de l'art.

Ils ont la structure suivante :

$CH_3\text{-}O\text{-}(CH_2\text{-}CH_2\text{-}O)_n\text{-}H$, dans laquelle n est un nombre entier, et leur masse molaire moyenne varie de 200 à 20 000.

De tels produits sont par exemple commercialisés par la société Aldrich sous la dénomination poly(éthylèneglycol)méthyl éther suivie de la masse molaire moyenne du PEGME considéré, par exemple poly(éthylèneglycol)méthyléther 2000.

Dans le cadre de la présente invention tout comme pour les PEG, seuls les PEGME de masse molaire moyenne inférieure ou égale à environ 10 000 (n ayant au maximum une valeur de 230) sont utilisés.

Avantageusement, on utilisera les PEGME qui ont une masse molaire moyenne comprise entre 1 000 et 8 000 et en particulier le PEGME qui a une masse molaire moyenne de 2 000 (n = 45).

**C/ Les copolymères de polyéthylène-polypropylèneglycol**

Ce sont des copolymères très connus que l'on désignera ci-après en abrégé PEO/PPO/PEO.

Ce sont des copolymères triblocs dont la partie centrale est un bloc oxyde de polypropylène et les extrémités des blocs oxyde de polyéthylène qui ont la structure suivante :

$$H\text{-}O\text{-}(CH_2\text{-}CH_2\text{-}O)_a\text{-}(\text{-}\overset{CH_3}{\overset{|}{C}}H\text{-}CH_2\text{-}O)_b\text{-}(CH_2\text{-}CH_2\text{-}O)_a\text{-}H\ ;$$

dans laquelle a et b sont des nombres entiers.

Ils sont souvent désignés sous le terme général de poloxamer.

Il existe pour ces produits de très nombreux grades caractérisés par les valeurs de a et b qui définissent leurs

masses molaires moyennes. On peut ainsi citer :

- poloxamer 124 : a=12 b=20 masse molaire moyenne comprise entre 2 090 et 2 360
- poloxamer 188 : a=80 b=27 masse molaire moyenne comprise entre 7 680 et 9 510
- poloxamer 407 : a=101 b=56 masse molaire moyenne comprise entre 9 840 et 14 600.

Ils sont commercialisés par exemple par la société BASF sous la dénomination Pluronic®.

Ici aussi comme précédemment seuls les PEO/PPO/PEO de masse molaire moyenne inférieure ou égale à environ 10 000 seront utilisés.

Dans le cadre de la présente invention on préférera un PEO/PPO/PEO de masse molaire voisine de 2000 comme par exemple le produit commercialisé sous la dénomination poly(éthylèneglycol)-block-poly(propylèneglycol)-block-poly-(éthylèneglycol) 1900 par la société Aldrich, de masse molaire moyenne égale à 1900.

Les copolymères amphiphiles selon l'invention peuvent être facilement préparés par réaction d'estérification entre les fonctions anhydrides succiniques du SEBS maléisé et les fonctions hydroxyles des PEG. PEGME ou PEO/PPO/PEO utilisés.

La réaction d'un alcool sur une fonction anhydride donne de façon réversible un ester. Dans le cadre de la présente invention, cette estérification peut être représentée par le schéma simplifié suivant :

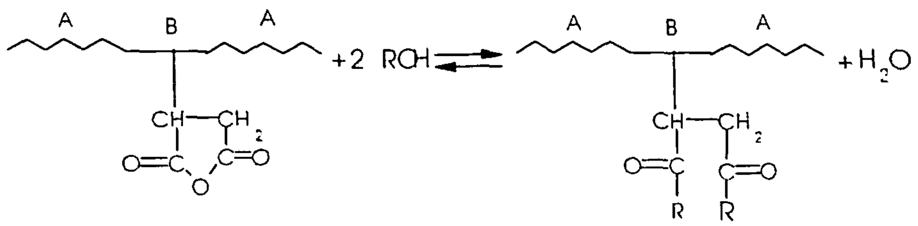

Afin de favoriser la réaction d'estérification on introduit un excès de fonctions hydroxyles par rapport aux fonctions anhydrides. La réaction est avantageusement catalysée par un acide, et l'eau formée est éliminée par distillation azéotropique pour déplacer l'équilibre vers le produit greffé. La réaction est réalisée de préférence sous atmosphère inerte.

Selon un second aspect de l'invention on préconise donc également un procédé pour la préparation desdits copolymères amphiphiles, ledit procédé étant caractérisé en ce que l'on réalise une réaction d'estérification entre les fonctions anhydrides succiniques portées par la partie poly(éthylène-butylène) d'un copolymère poly(styrène)-poly(éthylène-butylène)-poly(styrène) (SEBS maléisé) et les fonctions hydroxyles d'un composé hydrophile choisi parmi les polyéthylèneglycols, (PEG), les polyéthylèneglycols mono méthyléther (PEGME) et les copolymères de polyéthylène-propylène glycol (PEO/PPO/PEO) de masse molaire moyenne inférieure ou égale à 10 000 ou leurs mélanges, de préférence en présence d'un catalyseur acide, en éliminant l'eau formée et avec un excès de fonctions hydroxyles par rapport aux fonctions anhydrides succiniques du SEBS maléisé.

De façon plus précise le procédé de synthèse est le suivant :

On dissout à chaud (à environ 120 °C température de reflux du solvant) et sous agitation le SEBS maléisé dans un solvant, de préférence le toluène.

On prépare à part une solution d'au moins un composé hydrophile (PEG, PEGME, PEO/PPO/PEO ou leurs mélanges) en chauffant ce(s) dernier(s) à sa(leur) température de fusion sous agitation dans un solvant, de préférence le toluène. On utilise avantageusement un excès de composés hydrophiles. Le nombre de fonctions hydroxyles rapporté au nombre de fonctions anhydrides peut ainsi varier de 2.5 à 20.

A la solution de copolymère SEBS maléisé préalablement obtenue sous agitation et toujours à reflux, on ajoute une quantité catalytique (environ 15 à 25 gouttes) d'acide, par exemple d'acide sulfurique, puis la solution de composé (s) hydrophile(s) dans le solvant préparée précédemment.

On agite sous distillation azéotropique ce mélange à reflux durant 30 minutes à 5 heures selon la nature du (des) composé(s) hydrophile(s) jusqu'à réalisation complète de la réaction d'estérification entre les fonctions anhydrides (ou leurs éventuelles formes acides) des groupes succiniques du SEBS maléisé et les fonctions hydroxyles du(des) composé(s) hydrophile(s). L'état d'avancement de la réaction est suivi en utilisant les techniques bien connues de l'homme de l'art, par exemple par spectroscopie infra rouge jusqu'à disparition du pic d'absorption du carbonyl de

l'anhydride soit 1785 $cm^{-1}$.

On précipite alors le mélange réactionnel à chaud à environ 90-100 °C dans un solvant de précipitation adéquat comme par exemple l'éthanol ou un mélange éthanol/eau, ledit solvant de précipitation représentant environ 4 fois le volume de l'ensemble des solvants réactionnels utilisés.

Après filtration, les solvants résiduels sont éliminés du copolymère SEBS amphiphile obtenu, par évaporation à l'étuve sous vide à 40-50 °C.

Il est alors nécessaire de purifier ce dernier pour éliminer le(s) composé(s) hydrophile(s) PEG, PEGME ou PEO/PPO/PEO utilisé(s) en excès encore présent(s).

On redissout donc le polymère amphiphile obtenu sous agitation à environ 90 à 110°C dans le toluène et on reprécipite la solution obtenue dans le même solvant et le même volume que lors de l'étape de précipitation réalisée précédemment à la fin de la synthèse.

De même le copolymère SEBS amphiphile est récupéré par filtration et séché à nouveau à l'étuve sous vide à 40-50 °C.

On répète cette étape de purification jusqu'à élimination totale du(des) composé(s) hydrophile(s) en vérifiant selon les techniques connues de l'homme de l'art l'absence du pic de ce(ces) dernier(s) par chromatographie par pennéation de gel (GPC).

Selon un troisième aspect, la présente demande vise à couvrir l'utilisation d'un copolymère amphiphile selon l'invention en tant qu'agent émulsifiant ou en tant qu'agent absorbant.

En effet, de par leur nouvelle structure chimique, les copolymères amphiphiles selon l'invention ne sont plus hydrophobes, comme les copolymères SEBS connus à ce jour, mais possèdent à la fois une partie hydrophobe et une partie hydrophile. Cette dualité va donc modifier leurs propriétés de mouillage et de compatibilité avec des produits hydrophiles ou hydrophobes et donc permettre leur utilisation dans de nouvelles fonctions comme par exemple agent absorbant ou émulsifiant.

Ces nouveaux copolymères amphiphiles sont particulièrement avantageux en ce qu'ils permettent l'incorporation de produits hydrophiles ou l'absorption de quantités plus ou moins importantes de liquides hydrophiles dans des compositions à base de SEBS. Ces compositions ouvrent de nouveaux champs d'application des SEBS, notamment la réalisation de produits dans lesquels ils interviennent au contact de la peau, des plaies ou des muqueuses comme par exemple en pharmacie, cosmétologie ou dermatologie.

Bien entendu cette énumération n'est pas limitative et la présente demande vise à couvrir l'utilisation desdits copolymères amphiphiles dans tous domaines et toutes applications dans lesquels leur capacité d'absorption ou leur pouvoir émulsifiant peut être utilisé.

Les avantages et caractéristiques de l'invention seront mieux compris à la lecture de la description qui va suivre d'exemples de réalisation et d'utilisation.

Bien entendu l'ensemble de ces éléments n'est nullement limitatif mais est donné à titre d'illustration.

**Synthèse des copolymères amphiphiles**

On applique pour tous ces exemples le procédé de synthèse décrit précédemment. Dans toutes ces synthèses on utilise un réacteur muni d'un réfrigérant, équipé d'un desséchant, d'un sas relié au vide et à l'azote si la réaction est effectuée sous atmosphère inerte, et d'un Dean Stark pour éliminer l'eau formée par distillation azéotropique.

**Exemple 1**

Sous azote on introduit dans le réacteur 150 ml de toluène et on ajoute 20 g de Kraton G 1901® (copolymère SEBS maléisé) commercialisé par la société SHELL. On chauffe à reflux (environ 110 °C) sous agitation jusqu'à dissolution totale du copolymère SEBS maléisé. On prépare à part une solution de PEGME de masse molaire 2 000 commercialisé par la société Aldrich sous la dénomination poly(éthylèneglycol)méthyléther 2000. On dissout ainsi sous agitation 32,32 g de PEGME 2000 en chauffant à sa température de fusion dans 100 ml de toluène. A la solution de copolymère SEBS maléisé préalablement obtenue, on ajoute toujours sous agitation et à reflux, environ 20 gouttes d'acide sulfurique. On ajoute ensuite toujours sous agitation et à reflux la solution de PEGME 2000 dans le toluène préparée précédemment. On a ainsi dans ce cas 4 fonctions hydroxyles pour chaque fonction anhydride. On agite toujours à reflux le mélange obtenu jusqu'à réalisation complète de la réaction d'estérification, soit ici environ 30 à 40 minutes. On précipite alors à chaud, à environ 90 à 100 °C, la solution dans 1,5 litre d'un mélange eau-éthanol 50/50.

Après filtration les solvants résiduels sont éliminés du précipité obtenu par évaporation à l'étuve sous vide à 40-50 °C. Pour purifier le polymère amphiphile obtenu il est nécessaire d'éliminer le PEGME 2000 en excès qui n'a pas réagi lors de la synthèse. Pour cela, on redissout à chaud aux environs de 90-100 °C, en agitant, le polymère amphiphile dans 100 à 150 ml de toluène et la solution obtenue est à nouveau précipitée dans 1,5 litre d'un mélange eau-éthanol 50/50. Après filtration, le précipité récupéré est séché à l'étuve sous vide à 40-50 °C. On répète cette étape de purification

(redissolution-précipitation et séchage sous vide) jusqu'à élimination totale du PEGME 2000.

**Exemples 2 à 10**

On procède de façon identique à l'exemple 1 pour greffer sur 20 g de Kraton G 1901® des PEG et PEGME de masses molaires moyennes différentes et un PEO/PPO/PEO de masse molaire moyenne 1900. On a ainsi greffé les composés commercialisés par la société Aldrich sous les dénominations suivantes :

Poly(éthylèneglycol)200 (en abrégé ci-après PEG 200, exemple 2)
Poly(éthylèneglycol) 600 (en abrégé ci-après PEG 600, exemple 3)
Poly(éthylèneglycol) 2000 (en abrégé ci-après PEG 2000, exemple 4)
Poly(éthylèneglycol) 4600 (en abrégé ci-après PEG 4600, exemple 5)
Poly(éthylèneglycol) 8000 (en abrégé ci-après PEG 8000, exemple 6)
Poly(éthylèneglycol)méthyléther 350 (en abrégé ci-après PEGME 350, exemple 7)
Poly(éthylèneglycol)méthyléther 550 (en abrégé ci-après PEGME 550, exemple 8)
Poly(éthylèneglycol)méthyléther 5000 (en abrégé ci-après PEGME 5000, exemple 9)
Poly(éthylèneglycol)-block-poly(éthylèneglycol)-block-poly(éthylèneglycol) 1900 (en abrégé ci-après PEO/PPO/PEO 1900, exemple 10).

Le tableau 1 rassemble les différents éléments relatifs à toutes ces synthèses.

**Q** : quantité de composé hydrophile ajoutée exprimée en grammes
**V** : volume de toluène en ml utilisé pour dissoudre le composé hydrophile
**SP** composition en pourcentage du volume de solvant de précipitation pour précipiter et purifier le copolymère amphiphile à la fin de la réaction
**n**: rapport du nombre de fonctions hydroxyles du composé hydrophile sur le nombre de fonctions anhydrides disponibles sur le SEBS maléisé.

**Tableau 1**

| Exemples | Nature du composé hydrophile | Q | V | n | SP Ethanol/eau | |
|---|---|---|---|---|---|---|
| **1** | PEGME 2000 | 32,32 | 100 | 4 | 50 | 50 |
| **2** | PEG 200 | 16,16 | 20 | 20 | 100 | 0 |
| **3** | PEG 600 | 48,48 | 60 | 20 | 100 | 0 |
| **4** | PEG 2000 | 86.8 | 80 | 10 | 50 | 50 |
| **5** | PEG 4600 | 73.4 | 120 | 4 | 50 | 50 |
| **6** | PEG 8000 | 80,8 | 150 | 2,5 | 50 | 50 |
| **7** | PEGME 350 | 11,2 | 20 | 8 | 100 | 0 |
| **8** | PEGME 550 | 8,9 | 20 | 4 | 100 | 0 |
| **9** | PEGME 5000 | 60.6 | 120 | 3 | 50 | 50 |
| **10** | PEO/PPO/PEO 1900 | 76.7 | 90 | 20 | 100 | 0 |

**Hydrophilie des copolymères amphiphiles**

L'hydrophilie des copolymères amphiphiles selon l'invention peut être mise en évidence par des mesures d'angles de contact.

Cette méthode est utilisée de façon générale pour évaluer la mouillabilité d'un solide par un liquide en étudiant l'aptitude du liquide à occuper la plus grande surface possible lorsqu'on le dépose sur le solide.

Lorsqu'on utilise une goutte d'eau comme liquide on peut ainsi caractériser l'hydrophilie du matériau utilisé. Un matériau hydrophile absorbe la goutte d'eau. Si la goutte d'eau n'est pas absorbée, la mesure de l'angle de contact qu'elle forme sur le matériau sur lequel elle est déposée, permet d'évaluer l'affinité dudit matériau pour l'eau et donc son caractère hydrophile.

En fonction de la nature plus ou moins hydrophile du matériau testé la goutte d'eau est donc plus ou moins aplatie et prend différents aspects et on a donc des angles de contact différents.

Ainsi si la goutte ne mouille pas le solide l'angle vaut 180 degrés, tandis que si la goutte mouille totalement le solide l'angle vaut 0 degré.

On a donc utilisé cette méthode de mesure d'angle de contact pour évaluer le caractère hydrophile des copolymères amphiphiles selon l'invention et du SEBS maléisé initial.

Les mesures ont été réalisées dans les conditions suivantes.

On fabrique sous presse hydraulique à chaud des films de copolymères amphiphiles selon l'invention de 250 μm d'épaisseur. On découpe à l'emporte pièce des échantillons d'environ 10 $cm^2$ que l'on laisse à 23 °C durant 24 heures.

Les échantillons sont collés sur une lame de microscope par l'intermédiaire d'un adhésif double face.

On dépose une goutte d'eau de volume constant sur le film à l'aide d'une seringue.

La goutte est filmée par une caméra et les valeurs des angles de contact sont obtenues automatiquement à l'aide d'un appareil automatique de mesure dynamique d'angle de contact DIGIDROP® N° 3160 qui analyse les images vidéo de la goutte d'eau.

L'état de surface entraînant dans la plupart des cas une dissymétrie de la goutte et donc des angles de contact différents à droite et à gauche, l'appareil DIGIDROP® fait la moyenne des 2 angles pour palier à cette erreur.

Pour chaque polymère on étudie 3 films. Pour chaque film on applique trois gouttes d'eau et pour chaque goutte on réalise 2 mesures.

Les résultats obtenus sont rassemblés dans le tableau II dans lequel les valeurs d'angles de contact, moyenne de l'ensemble de ces mesures, sont données en degré.

**TABLEAU II**

| Produit | Nature du composé hydrophile greffé | Angle de contact |
|---|---|---|
| KRATON G 1901 | - | 95 |
| Exemple 2 | PEG 200 | 86 |
| Exemple 3 | PEG 600 | 85 |
| Exemple 4 | PEG 2000 | 76 |
| Exemple 6 | PEG 8000 | 72 |
| Exemple 7 | PEGME350 | 87 |
| Exemple 8 | PEGME550 | 86 |
| Exemple 1 | PEGME 2000 | 75 |
| Exemple 10 | PEO/PPO/PEO 1900 | 75 |

L'analyse des résultats du tableau II montre bien que les copolymères amphiphiles selon l'invention ont une meilleure affinité pour l'eau que le SEBS maléisé (KRATON G 1901®). On a une diminution de l'angle de contact de 10 à 20 degrés suivant les cas.

On constate aussi que l'on peut moduler cette affinité pour l'eau et donc le caractère hydrophile des copolymères amphiphiles en jouant sur la nature du composé hydrophile greffé et en particulier sur la longueur de la chaîne de PEG ou PEGME. Plus la longueur de la chaîne augmente plus la valeur de l'angle de contact diminue. On passe ainsi de 86 degrés à 72 degrés quand on greffe du PEG 8000 à la place du PEG 200. De même on passe de 87 degrés à 75 degrés quand on greffe du PEGME 2000 à la place du PEGME 550.

Les copolymères amphiphiles selon l'invention ont donc une meilleure affinité pour les liquides hydrophiles et une hydrophilie supérieure à celle des copolymères SEBS connus.

**Capacité d'absorption des copolymères amphiphiles**

Grâce à cette affinité et à leur nature plus hydrophile, les copolymères amphiphiles selon l'invention présentent une capacité d'absorption des liquides hydrophiles supérieure à celle des SEBS connus jusqu'à présent.

Pour mettre en évidence l'augmentation significative de cette capacité d'absorption, on a mesuré la quantité d'eau absorbée par des films de copolymères amphiphiles selon l'invention et de Kraton G 1901® par la méthode décrite ci-après.

Pour effectuer ces mesures, on réalise des films de copolymères de 2 cm de diamètre et 500 μm d'épaisseur. Ces films sont obtenus sous presse hydraulique à chaud et découpés à l'emporte pièce aux dimensions souhaitées. La

mesure de la capacité d'absorption est effectuée par différence de pesée et correspond à la quantité d'eau absorbée par le film au bout d'un temps t. Elle est exprimée en pourcentage.

On pèse la masse initiale du film, soit mo.

Le film est ensuite déposé dans une enceinte saturée en vapeur d'eau (dessiccateur étanche) avec un pourcentage d'humidité de 100 %.

La température du dessiccateur étanche est maintenue constante en plaçant ce dernier dans une étuve thermorégulée. Les mesures sont réalisées à la température de 37 °C.

Au bout d'un certain temps t, on récupère le film et on le pèse, soit mt la masse du film à l'instant t.

Le pourcentage d'eau absorbée est calculé à partir de la formule

$$\frac{mt-mo}{mt} \times 100$$

Pour chaque échantillon de polymères étudiés on réalise deux films. Pour chaque film on réalise 2 mesures. On réalise la moyenne de l'ensemble de ces mesures.

On a ainsi mesuré la capacité d'absorption du SEBS maléisé Kraton G 1901® (en abrégé KG 1901 ci-après) et de copolymères amphiphiles obtenus précédemment KG 1901 greffé PEGME 2000, (exemple 1) KG 1901 greffé PEG 200 (exemple 2), KG 1901 greffé PEG 2000 (exemple 4), KG 1901 greffé PEG 8000 (exemple 6), KG 1901 greffé PEGME 350 (exemple 7), KG 1901 greffé PEGME 550 (exemple 8) et KG 1901 greffé PEO/PPO/PEO 1900 (exemple 10).

Les résultats obtenus sont illustrés par les figures 1, 2 et 3 sur lesquelles on a représenté le pourcentage d'eau absorbée mesuré selon la méthode décrite ci-dessus, en fonction du temps exprimé en heures.

Plus précisément :

- la figure 1 représente le pourcentage d'eau absorbée en fonction du temps exprimé en heures par le Kraton G 1901® (KG1901) et les copolymères des exemples 2,4,6 (copolymères amphiphiles à base PEG) soit respectivement sur la figure KG 1901 greffé PEG200, KG 1901 greffé PEG 2000 et KG 1901 greffé PEG 8000.
- la figure 2 représente le pourcentage d'eau absorbée en fonction du temps exprimé en heures par le Kraton G 1901® (KG 1901) et les copolymères des exemples 1, 7 et 8 (copolymères amphiphiles à base de PEGME) soit respectivement sur la figure KG 1901 greffé PEGME 2000, KG 1901 greffé PEGME 350 et KG 1901 greffé PEGME 550.
- la figure 3 représente le pourcentage d'eau absorbée 550 en fonction du temps exprimé en heures par le Kraton G 1901® (KG 1901) et le copolymère amphiphile à base de PEO/PPO/PEO 1900 de l'exemple 10 en abrégé sur la figure KG 1901 greffé PEO/PPO/PEO.

L'analyse de ces 3 figures montre l'augmentation significative de la capacité d'absorption des copolymères amphiphiles selon l'invention par rapport au SEBS maléisé Kraton G 1901® qui a une nature hydrophobe. On constate aussi sur chaque figure que cette augmentation est visible dès les premières heures. De plus cette dernière augmente au cours du temps avant d'atteindre un plateau entre 6 et 8 jours contrairement au Kraton G 1901®.

Ces deux phénomènes (rapidité d'absorption et évolution au cours du temps) peuvent être particulièrement intéressants dans des applications comme par exemple le traitement des plaies où ces deux propriétés sont indépendamment ou simultanément recherchées. Les mesures d'angle de contact avaient démontré que l'affinité hydrophile des copolymères amphiphiles augmente avec la longueur de la chaîne de PEG ou PEGME. Cette propriété se traduit ici par l'augmentation de la capacité d'absorption des copolymères amphiphiles.

Ainsi dans le cas illustré à la figure 1, alors que le Kraton G 1901® absorbe au maximum 1,5 % d'eau, le Kraton greffé PEG 200 absorbe déjà 10 % d'eau soit environ 10 fois plus, et les Kraton greffés PEG 2000 et 8000 presque 20 % d'eau soit environ 20 fois plus.

On retrouve un résultat analogue dans le cas illustré la figure 2 pour les Kraton 1901 greffés PEGME.

On dispose donc grâce à la présente invention, d'une gamme de copolymères amphiphiles utilisables comme agent absorbant parmi lesquels on peut choisir celui dont la capacité d'absorption est la mieux adaptée (faible, rapide, durable, importante) en fonction du but poursuivi.

Par exemple, on pourra simplifier la réalisation de formulations à base de SEBS et d'autres polymères absorbants tels les alginates ou les dérivés de cellulose en diminuant la quantité de ces derniers, voire en les supprimant. On favorisera ainsi la compatibilité entre ces différents composés et les risques de perte de cohésion des produits finaux après absorption, s'en trouveront diminués.

De même, lors de la réalisation de patchs cosmétiques ou pharmaceutiques la capacité à absorber des sécrétions ou la sueur peut être un élément important pour la réalisation de tels produits.

**Utilisation comme agent émulsifiant des copolymères amphiphiles**

Outre leur capacité d'absorption et donc leur utilisation comme agent absorbant les copolymères amphiphiles selon l'invention présentent un autre avantage.

On peut en effet, en fonction de la nature du composé hydrophile greffé sur le SEBS maléisé, moduler leur affinité pour les milieux hydrophobes (tels les huiles) et pour les milieux hydrophiles tel l'eau. Ils peuvent donc être employés avec ces deux milieux simultanément. On dispose ainsi désormais d'une famille de nouveaux composés qui, suivant la nature du composé hydrophile et en particulier la longueur de la chaîne des PEG, PEGME ou PEO/PPO/PEO, peuvent permettre la réalisation ou la stabilisation de mélanges eau dans huile, huile dans eau voire les deux ; d'où leur utilisation comme agent émulsionnant.

Cette autre application des copolymères amphiphiles selon l'invention est illustrée par les expériences suivantes dans lesquelles on a évalué leur capacité d'agent émulsifiant par l'étude de la stabilité de diverses émulsions les incorporant.

On réalise des émulsions à base d'eau et d'huile contenant 1 % de copolymère amphiphile selon l'invention. On fait varier suivant les expériences la quantité d'huile et d'eau de manière à réaliser des émulsions dans lesquelles on a 25 % d'eau - 75 % d'huile, 50 % d'eau - 50 % d'huile ou 75 % d'eau - 25% huile.

Dans un bécher contenant le polymère sous agitation à environ 100 tours/minute à l'aide d'un mélangeur Rayneri et maintenu à une température d'environ 90-100 °C à l'aide d'un bain d'huile, on ajoute simultanément l'eau et l'huile petit à petit.

Au bout d'une demi-heure, quand l'ensemble est bien homogénéise, on arrête le chauffage et l'agitation, on laisse reposer l'émulsion formée et on observe son aspect.

On prépare ainsi pour un total de 150 g de polymères, d'eau et d'huile :

- une émulsion eau-huile 50/50 qui contient 1,5 g de polymère, 74,25 g d'eau et 74,25 d'huile
- une émulsion huile dans eau 25/75 qui contient 1,5 g de polymère, 49,5 g d'huile et 99 g d'eau
- une émulsion eau dans huile 25/75 qui contient 1,5 g de polymère 49,5 g d'eau et 99 g d'huile.

De fait à cause de l'évaporation de l'eau due à la température élevée on ajoute une quantité d'eau plus importante que la quantité d'eau théorique requise afin de se rapprocher le plus possible de la répartition eau-huile théorique visée (écart inférieur à 3 %).

Pour réaliser ces émulsions, on utilise de l'eau distillée et comme huile une huile minérale commercialisée par la société Shell sous la dénomination ONDINA 15®.

On a ainsi testé comme agent émulsifiant un SEBS non fonctionnalisé commercialisé par la société Shell sous la dénomination Kraton G 1652®, le SEBS maléisé commercialisé par la société Shell sous la dénomination Kraton G 1901® et 2 copolymères amphiphiles selon l'invention un à base de PEGME, à savoir le produit de l'exemple 1 à base de PEGME 2000, et l'autre à base de PEG à savoir le produit de l'exemple 6 à base de PEG 8000.

Les résultats obtenus sont rassemblés dans le tableau III.

**Tableau III**

| Polymère | Répartition eau/huile | Aspect de l'émulsion |
|---|---|---|
| KRATON G 1652 | 50/50 | Non stable démixtion immédiate |
| KRATON G 1901 | 50/50 | Non stable démixtion immédiate |
| Exemple 1 | 50/50 | Stable pas d'évolution au bout de 3 semaines |
| Exemple 1 | 25/75 | Stable pas d'évolution au bout de 3 semaines |
| Exemple 1 | 75/25 | Stable pas d'évolution au bout de 3 semaines |
| Exemple 6 | 25/75 | Instable se dégrade au cours du temps |
| Exemple 6 | 75/25 | Stable pas d'évolution au bout de 3 semaines |

A l'analyse du tableau III on constate qu'avec les SEBS aujourd'hui disponibles (Kraton G 1652 et Kraton G 1901®) il est impossible de réaliser une émulsion. Dès l'arrêt du chauffage et de l'agitation on constate l'apparition de 2 phases distinctes eau et huile.

En revanche des copolymères amphiphiles selon l'invention greffés avec du PEGME ou du PEG permettent d'obtenir des émulsions stables qui n'évoluent pas avec le temps. Ces produits agissent donc comme agent émulsifiant et ceci à une concentration faible de l'ordre de 1 %.

Suivant leur nature hydrophile plus ou moins marquée ils peuvent être utiles dans une large gamme d'émulsions.

Ainsi le copolymère amphiphile de l'exemple 1 greffé PEGME 2000 permet de réaliser des émulsions eau dans huile (25/75), huile dans eau (25/75) et huile-eau (50/50).

En revanche le copolymère amphiphile de l'exemple 6, qui a sans doute une affinité supérieure pour l'eau du fait d'une longueur de chaîne plus importante (8000 contre 2000), permet la réalisation d'une émulsion huile dans eau (25/75) stable mais pas eau dans huile (25/75).

Les copolymères amphiphiles selon l'invention peuvent donc être utilisés suivant leur nature, comme agents émulsionnants dans la fabrication d'émulsions très variés. Ceci est un avantage important qui ouvre un champ d'applications nouveau et très vaste pour la réalisation de nouvelles formulations à partir de SEBS dans de nombreux domaines en particulier la pharmacie, la cosmétologie ou la dermatologie.

## Revendications

1. Copolymères amphiphiles à blocs du type ABA comportant deux blocs terminaux thermoplastiques A poly(styrène) et un bloc central élastomère B **caractérisés en ce que** ce bloc central B est une séquence poly(éthylène-butylène) comportant des groupes hydrophiles greffés, ledit copolymère amphiphile ABA pouvant être représenté schématiquement par la structure suivante :

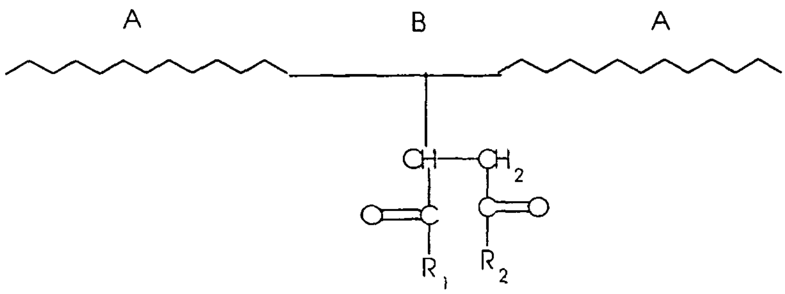

dans laquelle $R_1$ et $R_2$ identiques ou différents représentent un groupement hydrophile de masse molaire moyenne inférieure à 10 000, choisi parmi les groupes suivants :

$CH_3$-O-($CH_2$-$CH_2$-O)$_n$ ;

HO-($CH_2$-$CH_2$-O)$_n$ ;

$$HO-(CH_2-CH_2-O)_a-(\underset{CH_3}{\underset{|}{C}}H-CH_2-O)_b-(CH_2-CH_2-O-)_a\ ;$$

dans lesquels n, a et b représentent un nombre entier.

2. Copolymères amphiphiles selon la revendication 1, **caractérisés en ce que** $R_1$ et $R_2$ sont identiques.

3. Copolymères amphiphiles selon la revendication 2, **caractérisés en ce que** $R_1$ et $R_2$ représentent un groupe $CH_3$-O-($CH_2$-$CH_2$-O)$_n$.

4. Copolymères amphiphiles selon la revendication 3, **caractérisés en ce que** le groupe $CH_3$-O-($CH_2$-$CH_2$-O)$_n$ a une masse molaire moyenne comprise entre 200 et 8000, de préférence entre 1 000 et 8 000.

5. Copolymères amphiphiles selon la revendication 2, **caractérisés en ce que** $R_1$ et $R_2$ représentent un groupe HO-($CH_2$-$CH_2$-O)$_n$.

6. Copolymères amphiphiles selon la revendication 5, **caractérisés en ce que** le groupe HO-($CH_2$-$CH_2$-O)$_n$ a une masse molaire moyenne comprise entre 1 000 et 8 000, et en particulier une masse molaire moyenne de 2 000.

**7.** Copolymères amphiphiles selon la revendication 2, **caractérisés en ce que** $R_1$ et $R_2$ représentent un groupe

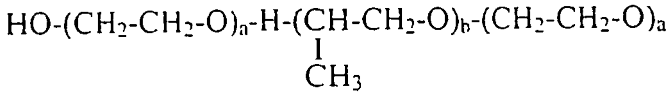

et de préférence un groupe qui a une masse molaire moyenne de 1900.

**8.** Copolymère amphiphile à blocs du type ABA comportant deux blocs terminaux thermoplastiques A poly(styrène) et un bloc central élastomère B **caractérisé en ce que** ce bloc central B est une séquence poly(éthylène-butylène) comportant des groupes hydrophiles greffés, ledit copolymère amphiphile ABA pouvant être représenté par la structure suivante

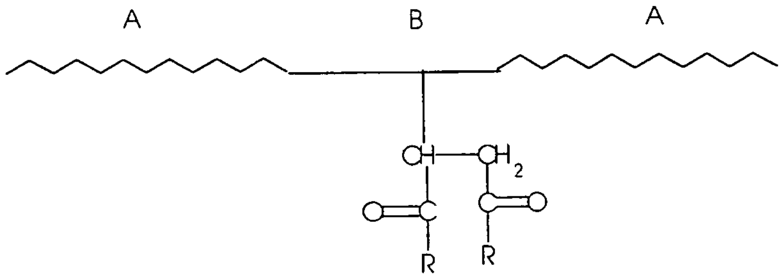

dans laquelle R représente un groupe $CH_3$-O-($CH_2$-$CH_2$-O)$_n$ de masse molaire moyenne égale à 2000 soit n=45.

**9.** Procédé de préparation d'un copolymère amphiphile selon l'une des revendications 1 à 8, **caractérisé en ce que** l'on réalise une réaction d'estérification entre les fonctions anhydrides succiniques portées par la partie poly(éthylènebutylène) d'un copolymère poly(styrène)-poly(éthylène-butylène)-poly(styrène) (SEBS maléisé) et les fonctions hydroxyles d'un composé hydrophile choisi parmi les polyéthylèneglycols, les polyéthylèneglycols mono méthyléther et les copolymères de polyéthylène-propylèneglycol de masse molaire moyenne inférieure ou égale à 10 000 ou leurs mélanges, de préférence en présence d'un catalyseur acide, en éliminant l'eau formée et avec un excès de fonctions hydroxyles par rapport aux fonctions anhydrides du SEBS maléisé.

**10.** Utilisation d'un copolymère amphiphile selon l'une des revendications 1 à 8 en tant qu'agent émulsifiant.

**11.** Utilisation d'un copolymère amphiphile selon l'une quelconque des revendications 1 à 8 en tant qu'agent absorbant.

## Claims

**1.** Amphiphilic block copolymers of the ABA type comprising two poly(styrene) thermoplastic end blocks A and one elastomeric central block B, wherein this central block B is a poly(ethylene/butylene) block containing grafted hydrophilic groups, it being possible for said amphiphilic copolymer ABA to be represented schematically by the following structure:

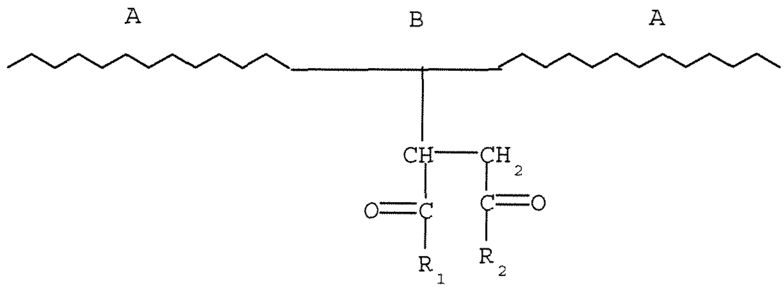

in which $R_1$ and $R_2$, which are identical or different, are hydrophilic groups with an average molecular weight below 10,000, selected from the following groups:

$CH_3$-O-($CH_2$-$CH_2$-O)$_n$

HO-($CH_2$-$CH_2$-O)$_n$

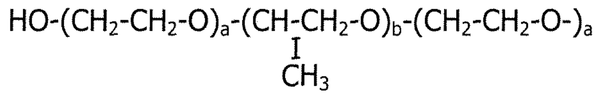

in which n, a and b are integers.

2. Amphiphilic copolymers according to claim 1 wherein $R_1$ and $R_2$ are identical.

3. Amphiphilic copolymers according to claim 2 wherein $R_1$ and $R_2$ are a group $CH_3$-O-($CH_2$-$CH_2$-O)$_n$.

4. Amphiphilic copolymers according to claim 3 wherein the group $CH_3$-O-($CH_2$-$CH_2$-O)$_n$ has an average molecular weight of between 200 and 8000, preferably of between 1000 and 8000.

5. Amphiphilic copolymers according to claim 2 wherein $R_1$ and $R_2$ are a group HO-($CH_2$-$CH_2$-O)$_n$.

6. Amphiphilic copolymers according to claim 5 wherein the group HO-($CH_2$-$CH_2$-O)$_n$ has an average molecular weight of between 1000 and 8000 and particularly an average molecular weight of 2000.

7. Amphiphilic copolymers according to claim 2 wherein $R_1$ and $R_2$ are a group

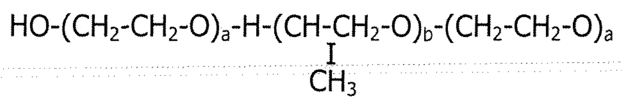

and preferably a group with an average molecular weight of 1900.

8. An amphiphilic block copolymer of the ABA type containing two polystyrene thermoplastic end blocks A and one elastomeric central block B, wherein this central block B is a poly(ethylene/butylene) block containing grafted hydrophilic groups, it being possible for said amphiphilic copolymer ABA to be represented by the following structure:

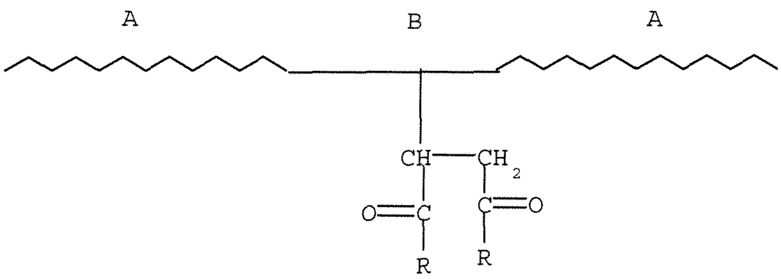

in which R is a group $CH_3$-O-($CH_2$-$CH_2$-O)$_n$ with an average molecular weight of 2000, i.e. n = 45.

**9.** A process for the preparation of an amphiphilic copolymer according to one of claims 1 to 8, wherein an esterification reaction is carried out between the succinic anhydride groups carried by the poly(ethylene/butylene) part of a polystyrene-poly(ethylene/butylene)-polystyrene copolymer (SEBS maleic anhydride) and the hydroxyl groups of a hydrophilic compound selected from polyethylene glycols, polyethylene glycol monomethyl ethers and polyethylene glycol/polypropylene glycol copolymers with an average molecular weight less than or equal to 10,000, or mixtures thereof, preferably in the presence of an acidic catalyst, with removal of the water formed and with an excess of hydroxyl groups relative to anhydride groups of the SEBS maleic anhydride.

**10.** Use of an amphiphilic copolymer according to one of claims 1 to 8 as an emulsifier.

**11.** Use of an amphiphilic copolymer according to any one of claims 1 to 8 as an absorption agent.

**Patentansprüche**

**1.** Amphiphile Copolymere mit Blöcken vom Typ ABA, umfassend zwei endständige thermoplastische Polystyrolblöcke A und einen zentralen Elastomerblock B, **dadurch gekennzeichnet, daß** dieser zentrale Block B eine Poly(Ethylen-Butylen)-Sequenz ist, die gepfropfte hydrophile Gruppen umfaßt, wobei das amphiphile Copolymer ABA schematisch durch die folgende Struktur dargestellt werden kann:

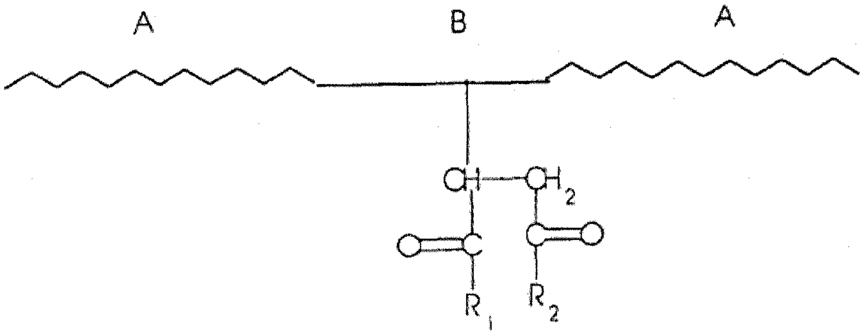

in welcher $R_1$ und $R_2$ identisch oder verschieden eine hydrophile Gruppe mit einer mittleren molekularen Masse unter 10.000 darstellen, gewählt unter den folgenden Gruppen:

$CH_3$-O-($CH_2$-$CH_2$-O)$_n$ ;

HO-($CH_2$-$CH_2$-O)$_n$ ;

$$HO\text{-}(CH_2\text{-}CH_2\text{-}O)_a\text{-}(\underset{CH_3}{\underset{|}{CH}}\text{-}CH_2\text{-}O)_b\text{-}(CH_2\text{-}CH_2\text{-}O)_a\ ;$$

in denen n, a und b eine ganze Zahl darstellen.

**2.** Amphiphile Copolymere nach Anspruch 1, **dadurch gekennzeichnet, daß** $R_1$ und $R_2$ identisch sind.

**3.** Amphiphile Copolymere nach Anspruch 2, **dadurch gekennzeichnet, daß** $R_1$ und $R_2$ eine $CH_3\text{-}O\text{-}(CH_2\text{-}CH_2\text{-}O)_n$-Gruppe darstellen.

**4.** Amphiphile Copolymere nach Anspruch 3, **dadurch gekennzeichnet, daß** die Gruppe $CH_3\text{-}O\text{-}(CH_2\text{-}CH_2\text{-}O)_n$ eine mittlere Molekularmasse hat, die zwischen 200 und 8000, vorzugsweise zwischen 1000 und 8000 liegt.

**5.** Amphiphile Copolymere nach Anspruch 2, **dadurch gekennzeichnet, daß** $R_1$ und $R_2$ eine Gruppe $HO\text{-}(CH_2\text{-}CH_2\text{-}O)_n$ darstellen.

**6.** Amphiphile Copolymere nach Anspruch 5, **dadurch gekennzeichnet, daß** die Gruppe $HO\text{-}(CH_2\text{-}CH_2\text{-}O)_n$ eine mittlere Molekularmasse hat, die zwischen 1000 und 8000 liegt und insbesondere eine mittlere Molekularmasse von 2000.

**7.** Amphiphile Copolymere nach Anspruch 2, **dadurch gekennzeichnet, daß** $R_1$ und $R_2$ eine Gruppe

$$HO\text{-}(CH_2\text{-}CH_2\text{-}O)_a\text{-}H\text{-}(\underset{CH_3}{\underset{|}{CH}}\text{-}CH_2\text{-}O)_b\text{-}(CH_2\text{-}CH_2\text{-}O)_a$$

darstellen und vorzugsweise eine Gruppe, die eine mittlere Molekularmasse von 1900 hat.

**8.** Amphiphiles Copolymer mit Blöcken von ABA, umfassend zwei endständige thermoplastische Polystyrolblöcke A und einen zentralen Elastomerblock B, **dadurch gekennzeichnet, daß** dieser zentrale Block B eine Poly(Ethylen-Butylen)-Sequenz ist, die gepfropfte hydrophile Gruppen umfaßt, wobei das amphiphile Copolymer ABA schematisch durch die folgende Struktur dargestellt werden kann:

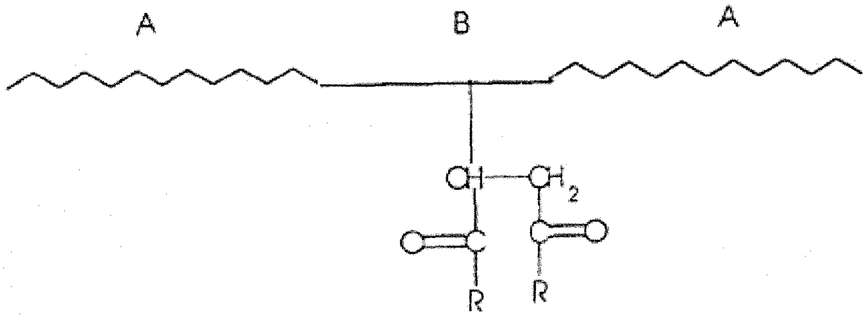

in welcher R eine Gruppe $CH_3\text{-}O\text{-}(CH_2\text{-}CH_2\text{-}O)_n$ mit einer mittleren Molekularmasse gleich 2000 ist, d.h. n=45.

**9.** Verfahren zur Herstellung eines amphiphilen Copolymers nach einem der Ansprüche 1 bis 8, **dadurch gekennzeichnet, daß** man eine Veresterungsreaktion zwischen den succinischen Anhydridfunktionen, die durch den Poly(Etyhlen-Butylen)-Teil getragen werden, mit einem Polystyrol-Poly(Ethylen-Butylen)-Polystyrol-Copolymer (maleiniertes SEBS) und den Hydroxylfunktionen einer hydrophilen Verbindung, die gewählt ist, unter den Polyethylenglykolen, den Monomethyletherpolyethylenglykolen und den Copolymeren von Polyethylen-Polypropylenglykol mit einer mittleren Molekularmasse kleiner oder gleich 10000 oder deren Gemischen, vorzugsweise in Gegenwart eines sauren Katalysators unter Entfernung von gebildetem Wasser und mit einem Überschuß von Hydroxylfunktionen im Verhältnis zu den Anhydridfunktionen des maleinierten SEBS.

**10.** Verwendung eines amphiphilen Copolymers nach einem der Ansprüche 1 bis 8 als Emulgator.

**11.** Verwendung eines amphiphilen Copolymers nach einem der Ansprüche 1 bis 8 als Absorbstionsmittel.

## Figure 1

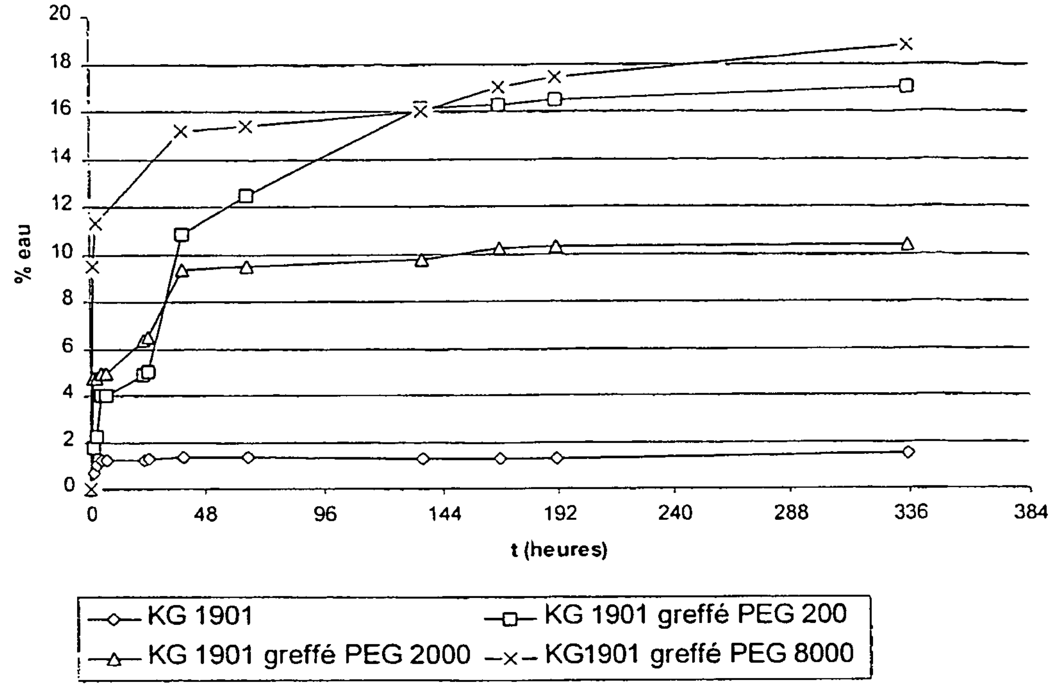


## Figure 2

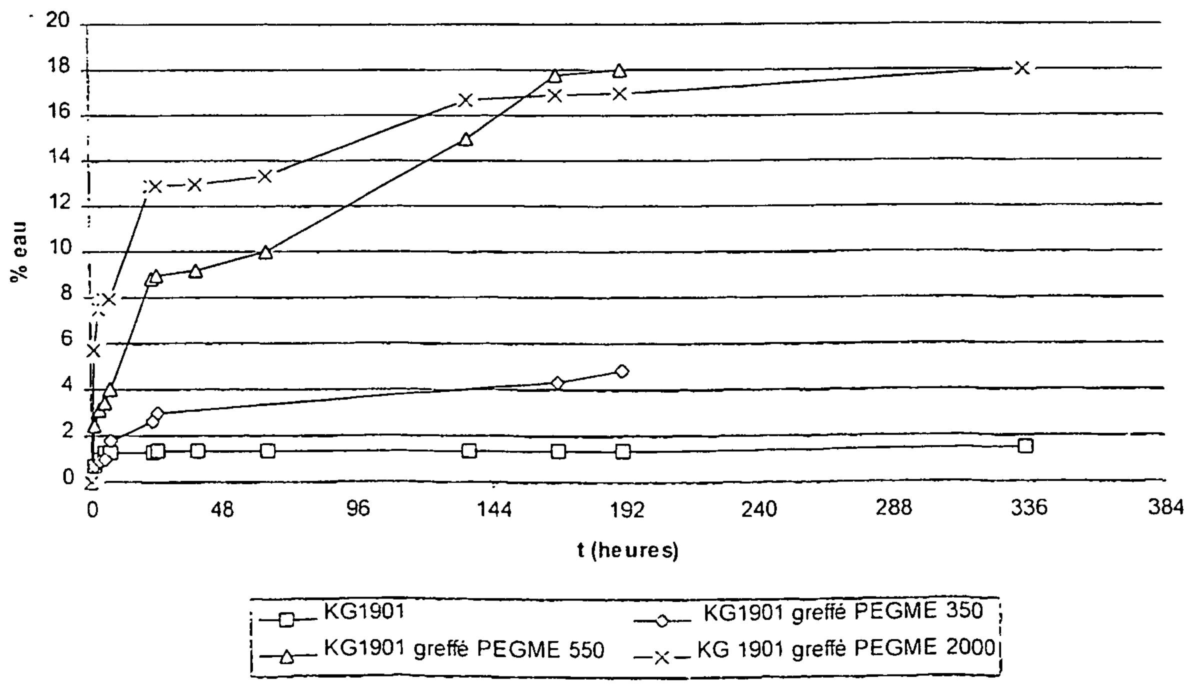

Figure 3

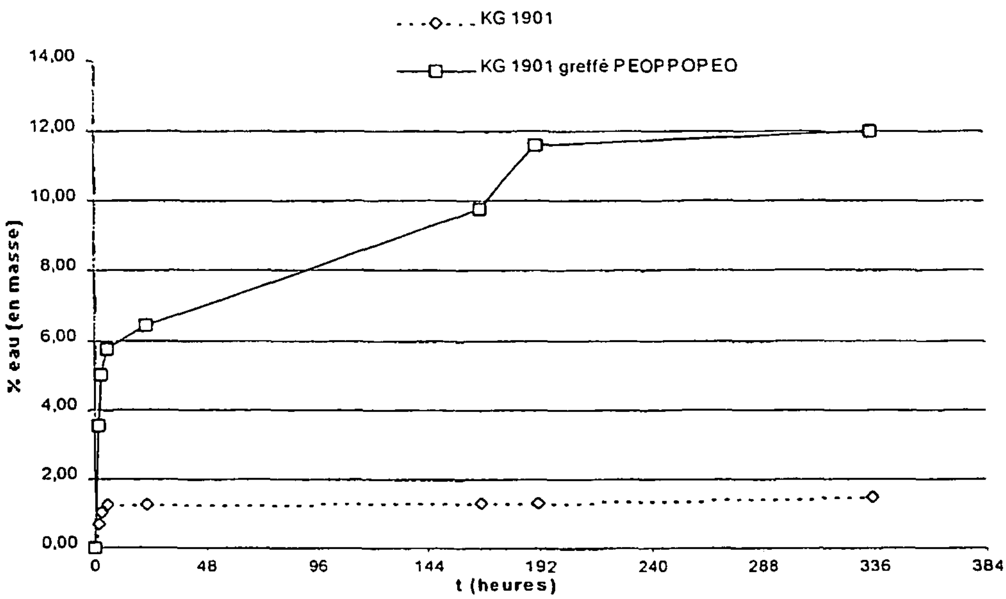
KG 1901
KG 1901 greffé PEOPPOPEO
14,00
12,00
10,00
8,00
6,00
4,00
2,00
0,00
% eau (en masse)
0
48
96
144
192
240
288
336
384
t (heures)